(19) Europäisches Patentamt
European Patent Office
Office européen des brevets

(11) **EP 3 117 032 B1**

(12) **EUROPÄISCHE PATENTSCHRIFT**

(45) Veröffentlichungstag und Bekanntmachung des Hinweises auf die Patenterteilung:
**07.07.2021 Patentblatt 2021/27**

(21) Anmeldenummer: **15707969.0**

(22) Anmeldetag: **05.03.2015**

(51) Int Cl.:
*D01F 2/00* (2006.01)  *D01F 1/07* (2006.01)
*C08K 5/00* (2006.01)  *C08K 5/34* (2006.01)
*C08L 1/00* (2006.01)  *C09K 21/10* (2006.01)

(86) Internationale Anmeldenummer:
**PCT/EP2015/054649**

(87) Internationale Veröffentlichungsnummer:
**WO 2015/135835 (17.09.2015 Gazette 2015/37)**

(54) **SCHWER ENTFLAMMBARE CELLULOSEFORMKÖRPER, HERGESTELLT NACH EINEM DIREKTLÖSEVERFAHREN**

FLAME RETARDANT SHAPED OBJECTS MADE FROM CELLULOSE PRODUCED BY A DIRECT SOLUTION PROCESS

DES OBJETS IGNIFUGES MOULÉS,À BASE DE CELLULOSE PRODUIT PAR UN PROCÉDÉ DE DISSOLUTION DIRECTE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **11.03.2014 DE 102014003455**

(43) Veröffentlichungstag der Anmeldung:
**18.01.2017 Patentblatt 2017/03**

(73) Patentinhaber: **Smartpolymer GmbH**
**07407 Rudolstadt (DE)**

(72) Erfinder:
• NIEMZ, Frank-Günter
  07407 Rudolstadt (DE)
• KRIEG, Marcus
  99423 Weimar (DE)
• MOOZ, Michael
  07422 Saalfelder Höhe (DE)
• BAUER, Ralf-Uwe
  07407 Rudolstadt (DE)
• RIEDE, Sabine
  07407 Uhlstädt-Kirchhasel (DE)

(74) Vertreter: **Plate, Jürgen**
**Plate Schweitzer Zounek**
**Patentanwälte**
**Rheingaustrasse 196**
**65203 Wiesbaden (DE)**

(56) Entgegenhaltungen:
**WO-A2-93/12173    US-A- 4 279 652**

• BERGHOF K ET AL: "THERMO-RESISTANT LYOCELL FIBERS", CHEMICAL FIBERS INTERNATIONAL, IBP PRESS, FRANKFURT AM MAIN, DE, Bd. 54, Nr. 1, 1. Februar 2004 (2004-02-01), Seite 34,36, XP001047388, ISSN: 0340-3343
• MEISTER F ET AL: "ALCERU THERMOSORB - INNOVATIVE, ACTIVE THERMOREGULATING CELLULOSE FIBER", CHEMICAL FIBERS INTERNATIONAL, IBP PRESS, FRANKFURT AM MAIN, DE, Bd. 55, Nr. 6, 1. Dezember 2005 (2005-12-01), Seite 355/356, XP001238401, ISSN: 0340-3343

EP 3 117 032 B1

**Beschreibung**

Die Erfindung betrifft permanent ausgerüstete Celluloseformkörper, die inhärente flammhemmende bzw. schwer entflammbare Eigenschaften besitzen. Die Celluloseformkörper sind nach einem Lyocellverfahren herstellbar.

Cellulosefasern, die aus einer Lösung von direkt gelöster Cellulose erhalten werden, sind vom internationalen Standardisierungsbüro in Brüssel (*BISFA*) als Lyocellfasern eingeordnet worden. Dabei erfolgen das Auflösen der Cellulose und das Verarbeiten der Cellulose-Spinnlösung ohne eine chemische Derivatisierung der Cellulose. Die Fasern können einmal als Stapelfasern und anschließender Ausspinnung zu Garnen oder direkt als endlose Filamente in einem Prozess der Erzeugung von textilen Flächengebilden durch Weben, Stricken, Vlieslegung usw. benutzt werden.

Der im Weiteren verwendete Begriff "Lyocell-Formköper", umfasst Fasern, Filamente, Vliesstoffe, Folien und Schaumstoffe auf Basis von Lyocell-Cellulose.

Der Begriff "Flammschutzmittel" bezeichnet ein Mittel, das das Brennen eines Produktes, auf welches es aufgetragen bzw. in welches es eingearbeitet wurde, verzögert bzw. unter normalen Bedingungen verhindert. Diese Eigenschaft wird im Weiteren als "schwer entflammbar" bezeichnet.

Zur Beurteilung der Brennbarkeit von Proben wird in der Praxis neben der Beurteilung des Brandes in einem Brandkasten der Wert des Limiting Oxygen Index (LOI) benutzt, d.h. das ist die minimale Sauerstoffkonzentration in %, bei der ein Werkstoff gerade noch brennt.

Auf dem Markt befindliche schwer entflammbare Lyocellfasern sind größtenteils durch nachträgliche Behandlung der Faser mit diversen Substanzen erhaltenen Beschichtungen gekennzeichnet, deren Haltbarkeit und Wirkung begrenzt ist. Vor allem bei notwendigen Nassbehandlungen der Textilien (Wäschen mit unterschiedlichen Waschmitteln, insbesondere bei erhöhten Temperaturen) bzw. durch Migration der Chemikalien aus den ausgerüsteten Fasern stoßen diese nachträglich aufgebrachten Beschichtungen an ihre Grenzen. Weiterhin beeinflussen diese Beschichtungen die Haptik und die Wasserdampftransportfähigkeit der Cellulosefaser negativ.

Auf dem Gebiet des Flammschutzes von cellulosischen Fasern, erzeugt mit dem Viskoseverfahren, gibt es in U. S. Patent 4,220,472 eine Lösung durch ein spezielles phosphorhaltiges Flammschutzmittel (Dithiophosphorsäureanhydrid), welches während der Faserherstellung eingearbeitet wird. Diese Lösung, ebenso wie andere Lösungsansätze führen beim Lyocellprozess, speziell beim in der Praxis durchgesetzten industriellen NMMO-Verfahren zu keinem zufriedenstellenden Ergebnis, da das Flammschutzmittel den Herstellungsprozess der Lyocellfasern nicht übersteht.

In der WO 2003040460 und in der DE 10038100 sind verschiedene Verfahren zur Flammschutzausrüstung von Cellulosefasern offenbart, wobei die Behandlung mit Cyanurchlorderivaten an der fertigen Faser vorgenommen wird. Nachteil einer solchen Verfahrensweise ist eine aufwändige Behandlungsprozedur, verbunden mit energetischen und ökologischen Nachteilen, das Vorhandensein von im Brandfall kritischem Chlor im Flammschutzmittel und ein relativ niedriger Flammschutz (LOI maximal 25).

Auch die in der DE 4306808 beschriebenen redispergierbaren Dispersionspulver aus verschiedenen Copolymerisaten werden auf eine bereits fertige Cellulosefaser aufgebracht, wobei dieses Verfahren eher für Faserverbundstoffe als für textil verarbeitbare Fasern bzw. Filamenten geeignet ist.

All diesen angeführten Patentschriften und den darin aufgezeigten Lösungen ist gemeinsam, dass nur eine Beschichtung der Faseroberfläche mit dem Flammschutzmittel realisiert wird. Diese Beschichtung ist meist dünn, führt so zu keinem wesentlichen und (wasch)permanenten Flammschutz.

In der WO 1994026962 ist beansprucht, dass eine frisch ersponnene Lyocellfaser nach dem Waschen und vor dem Trocknen mit einem Flammschutzmittel auf Phosphorbasis imprägniert und anschließend fixiert wird. Die Behandlung ist als aufwändig zu betrachten, ebenso werden sich textile Eigenschaften, wie z.B. der Griff, solcher Fasern verschlechtern. Weiterhin sind die aufgeführten Verbindungen nicht waschbeständig.

WO2011045673 beschreibt flammgeschützte Lyocellfasern mit eingearbeiteten anorganischen Flammschutzmitteln, wie Kaolin oder Talk. Diese Flammschutzmittel wirken nur in sehr hohen Anteilen und beeinflussen die textilphysikalischen Eigenschaften der Fasern nachteilig. Diese Fasern lassen sich daher nur in Matratzen und Polstermöbeln einsetzen.

Andere, in der Produktion von Viskosefasern eingesetzte und bewährte phosphorhaltige Flammschutzmittel, wie z.B. ®Exolit (Sandoflam), zum Beispiel in WO2011026159, überstehen die thermische Beanspruchung der Lösungsherstellung in einem Lyocellprozess nicht und sind dadurch kein geeignetes Flammschutzmittelsystem für Lyocell-Prozesse.

Bis zum heutigen Zeitpunkt ist keine zufriedenstellende Lösung bekannt, welche die Herstellung von schwer entflammbaren Lyocell-Formkörpern in einem durchgängigen Herstellungsprozess ohne wesentliche Verkomplizierung der Prozessdurchführung des Lyocellprozesses beschreibt und dabei Fasern, Filamente und Vliesstoffe mit einem ausreichenden textilen Charakter liefert. Dabei ist von großem Vorteil gegenüber, beispielsweise dem Viskoseprozess, dass im Lyocellprozess auch ein hoher Anteil an Zusatzstoffen in der Faser gute mechanische Eigenschaften garantieren, wie sie zu einer Verarbeitung der Fasern auf üblichen Maschinen in Spinnerei Weberei und Veredlung von sowie im Gebrauch der textilen Flächen notwendig sind.

Aufgabe der Erfindung war es daher, Flammschutzsysteme zu finden, die ohne wesentliche Änderung bzw. Erweiterung des Lyocell-Prozesses einen schwerentflammbaren textilen und textil verarbeitbaren Celluloseformkörper entstehen lassen, wobei der Flammschutz während der Nutzung, des Gebrauches und der Pflege der aus diesen Formkörpern hergestellten Produkte permanent und inhärent bestehen bleiben soll.

Weiterhin bestand die Aufgabe, cellulosische Formkörper wie Fasern, Filamente, Direktspinnvliese, Folien oder Schaumstoffe bereitzustellen, die dadurch gekennzeichnet sind, dass sie schwer entflammbare Eigenschaften besitzen und textil zu Garnen, Geweben, Gestricken und Vliesen weiter verarbeitbar sind. Dabei sollen die vorteilhaften Eigenschaften von Celluloseformkörpern, wie Atmungsaktivität und Feuchteaufnahme nicht beeinträchtigt werden und die textile Verarbeitung zu Stoffen, die direkt auf der Haut getragen werden können, gewährleistet bleiben.

Überraschend wurde gefunden, dass sich die Aufgabe lösen lässt mit einem Blend aus Cellulose und Melamincyanurat oder aus Cellulose und vernetzten oder teilvernetzten Melaminharzpartikeln.

Gegenstand der Erfindung ist somit ein Lyocell-Formkörper mit einer Matrix aus Lyocell-Cellulose, der durch einen Gehalt an Melamincyanurat oder vernetztem oder teilvernetztem Melaminharz schwer entflammbar ist und dadurch gekennzeichnet ist, das das Melamincyanurat oder das Melaminharz in Form von Partikeln über den Querschnitt der Cellulosematrix verteilt ist.

Gegenstand der Erfindung ist daneben ein Verfahren zur Herstellung des schwer entflammbaren Lyocellcellulose-Formkörpers mit den Schritten:

a) Herstellen einer Suspension von Cellulose in einem wasserhaltigen oder wasserfreien organischen Lösungsmittel,
b) Überführen der Suspension in eine Celluloselösung durch Scherung, gegebenenfalls verbunden mit einem Abdampfen von Wasser,
c) Verformen der Lösung durch Extrusion oder Blasformen mit Hilfe eines Formwerkzeugs,
d) Einleiten des Formkörpers in ein Fällbad,
e) Auswaschen und gegebenenfalls Nachbehandeln sowie
f) Trocknen des Formkörpers,

das dadurch gekennzeichnet ist, dass zur Verleihung der flammhemmenden Eigenschaften Melamincyanurat oder Melaminharz, jeweils allein oder in Verbindung mit anderen Flammschutzmitteln, im Schritt a) oder in oder am Ende von Schritt b) zugemischt wird.

Dabei ist es unerheblich, ob als Lösungsmittel ein wässriges tertiäres Aminoxid, wie beispielsweise N-Methylmorpholin-N-Oxid (NMMO) oder eine ionische Flüssigkeit, wie beispielsweise Butylmethyl-imidazoliumchlorid (BMIMCl), Ethylmethylimidazoliumacetat (EMIMAc) oder Ethylmethyl-imidazoliumdiethylphosphat (EMIM DEP) benutzt wird.

Melamincyanurat (MC) als stickstoffhaltiges Flammschutzmittel stellt eine gute Alternative zu halogenhaltigen Flammschutzmitteln dar. Im Brandfall bzw. bei hohen Temperaturen verdünnt dies die Gasphase und wirkt ähnlich wie ein halogenhaltiges Flammschutzmittel endotherm.

Vorgelagerte Untersuchungen zeigten, dass Melamincyanurat (= Cyanursäure-Melamin-Komplex; 1 : 1; CAS-Registriernummer. 37640-57-6) sich nicht in den genannten Lösungsmitteln löst. Überraschenderweise wurde aber gefunden, dass in Anwesenheit von Cellulose und unter Scherbedingungen homogene Spinnlösungen erhalten werden können, z.B. mit NMMO bzw. NMMO-Monohydrat als Lösungsmittel. Beispielsweise sind bei Zusammensetzungen Cellulose:Melamincyanurat:Lösemittel von 9:3:82% die erhaltenen Spinnlösungen partikelfrei und klar. Diese Lösung aus Cellulose und Melamincyanurat hat gegenüber einer reinen Celluloselösung mit der gleichen Konzentration einen um 0,04 bis 0,06 Einheiten höheren Brechungsindex.

Aus diesen Lösungen hergestellte Fasern stellen ein Blend dar. Die Koagulation der Faser, deren Auswaschung, Präparierung und Trocknung finden ohne ein "Ausbluten" einer Phase statt. Melamincyanurat und Cellulose bilden ein einheitliches Netzwerk. Möglicherweise zugegebene weitere partikuläre Flammschutzmittel werden in dieses Netzwerk aus beiden Stoffen fest und stabil eingebettet. Solche zusätzlich eingebrachten synergistisch wirkenden Flammschutzmittel sind partikulär und die Wasserlöslichkeit ist kleiner als 10 mg/l (Wasser 25°C). Die Partikel sollten bei der Herstellung von textilen Fasern im Bereich kleiner 50 $\mu$m, bevorzugt kleiner 10 $\mu$m sein. Synergistisch mit dem Melamincyanurat oder dem Melaminharz zusammenwirkende Flammschutzmittel sind beispielsweise Aluminiumhydroxid, roter Phosphor, phosphororganische Verbindungen, silikatische Nanopartikel oder Bor enthaltende Verbindungen.

Es zeigte sich dabei, dass die Herstellung der cellulosischen Formkörper aus dem beschriebenen Blend mit Melamincyanurat ohne wesentliche technologische Änderungen bzw. Ergänzungen zur allgemein üblichen Lyocell-Technologie vorgenommen werden kann. Die entstehenden cellulosischen Formkörper weisen ohne zusätzliche nachträgliche Ausrüstung oder Beschichtung schwer entflammbare Eigenschaften auf. Es kommt zu keiner wesentlichen Verschlechterung der bekleidungsphysiologischen Eigenschaften in Bezug auf Tragekomfort und Feuchtigkeitsmanagement und die Beeinflussung der textilphysikalischen Parameter der daraus hergestellten cellulosischen Formkörper ist immer noch akzeptabel und gewährleistet die weitere Verarbeitung und geforderten Gebrauchseigenschaften. Das Eigenschaftsprofil des Blends stellt eine auf Dauer erhalten bleibende Überlagerung der Eigenschaften der einzelnen Komponenten dar (Cellulose als hydrophiles Biopolymer mit den bekannten bekleidungsphysiologischen Eigenschaften; Melamincyanurat als Flammschutzmittel). Die gleichen Aussagen in Bezug auf das Verfahren und die textil-physikalischen und bekleidungsphysiologischen Eigenschaften der Formkörper treffen auch auf den Einsatz von vernetzten oder teilvernetzten Melaminharzpartikeln zu.

Die Lösung, flammhemmende Cellulosefasern aus einem Blend herzustellen, der durch Zumischen von Melamincyanurat zu Cellulose und Lösen beider Bestandteile in einem Lösungsmittel zu erzeugen ist neu. Die damit erzielten Effekten sind überraschend und nicht aus dem Stand der Technik herleitbar.

Selbst wenn das Melamincyanurat nicht vollständig gelöst ist, werden immer noch permanent flammfeste Lyocellfasern bzw. Filamente und Spinnvliese erhalten. Diese sind noch immer textil verarbeitbar. Cellulose-Formkörper aus einer solchen Mischung sind ebenfalls Bestandteil der vorliegenden Erfindung.

Bei der Nutzung von Melaminharzen als Flammschutzmittel von Celluloseformkörpern im erfindungsgemäßen Sinn werden vernetze oder teilvernetzte Partikel eingesetzt, wobei der Vernetzungsgrad 75 bis 100% sein kann. Bevorzugt werden möglichst vollständig vernetzte Melaminharzpartikel eingesetzt, um mögliche Wechselwirkungen und Reaktionen mit dem Lösungsmitttel auszuschließen. Weiterhin sind die eingesetzten Melaminharzpartikel in der Korngrößencharakteristik so einzusetzen, dass die Beziehung zwischen deren mittleren Korngröße von 98% aller Partikel ($D_{98}$) und des Durchmessers der erhaltenen Fasern oder Dicke der Folien ($D_F$) folgende Gleichung erfüllt:

$$\frac{(D_{98})^2}{(D_F)^2} \leq 0{,}25$$

Anstelle von oder zusätzlich zu Melamincyanurat sind auch andere Melaminsalze prinzipiell geeignet, wie Melamin-oxalat, -phosphat oder -borat, sowie Melamin selbst. Melamincyanurat und Melaminharze sind jedoch bevorzugt.

Die Fasern oder Filamente können zu textilen Flächengebilden bzw. die entstandenen Direktspinnvliese für Schutzbekleidung, für Dekorationszwecke, Möbel- und Sitzbezüge verwendet werden, ohne dass eine relevante Beeinträchtigung der textilen Verarbeitbarkeit auf konventionellen Textilmaschinen zu verzeichnen ist. Sie besitzen einen weichen textilen Griff, sie oder aus Ihnen hergestellte Produkte sind über normale Anfärbeverfahren farblich gestaltbar. Weiterhin ist eine hohe Permanenz der inhärenten flammhemmenden Eigenschaften durch Nutzung, Gebrauch und Pflege der aus diesen Fasern hergestellten Textilien gegeben. Für textile Anwendungen mit Flammschutzeigenschaften, insbesondere im Bekleidungsbereich, eignen sich vorzugsweise Formkörper mit einem Anteil von Melamincyanurat von 10 bis 50 Gew.-%, bevorzugt von 10 bis 35 Gew.-%. Der Celluloseanteil in diesem Formkörper verleiht den Produkten hohe Flexibilität, einen weichen Griff und gute Wasseraufnahmeeigenschaften. Der Celluloseanteil beträgt bevorzugt 50 bis 90 Gew.-%, besonders bevorzugt 65 bis 90 Gew.-%.

Für die verschiedenen Anwendungen werden je nach Anforderungsprofil die Anteile an Flammschutzmittel variiert oder die erhaltenen Formkörper können mit anderen Formkörpern gemischt werden in Form von Blends oder Laminaten und dann zu den entsprechenden Endprodukten verarbeitet werden.

Durch den Zusatz des Flammschutzmittels bereits während der Spinnlösungsherstellung wird eine feine Verteilung des Flammschutzmittels über den gesamten Querschnitt der Cellulosematrix im fertigen Formkörper erreicht, wobei die Gebrauchs- und Verarbeitungseigenschaften des Formkörpers erhalten bleiben.

Neben dem Melamincyanurat oder Melaminharz sind gegebenenfalls noch weitere Flammschutzmittel oder andere übliche Bestandteile in untergeordneten Mengen in dem erfindungsgemäßen Cellulose-Formkörper enthalten. Die weiteren Flammschutzmittel sind bevorzugt Aluminiumhydroxid, roter Phosphor, phosphororganische Verbindungen, silikatische Nanopartikel oder Bor enthaltende Verbindungen. Ihre Löslichkeit in Wasser von 25 °C beträgt vorzugsweise weniger als 10 mg/l. In dem Cellulose-Formkörper liegen sie partikulär vor, wobei die Partikelgröße bevorzugt weniger 50 $\mu$m, bevorzugt weniger als 10 $\mu$m beträgt. Die genannten weiteren Flammschutzmittel wirken synergistisch mit dem Melamincyanurat oder Melaminharz zusammen.

Die Formkörper sind auch hier allgemein Fasern, Filamente, Folien oder Schaumstoffe. Der Anteil des Melamincyanurats reduziert die Quellbarkeit der entstehenden Formkörper. Neben textilen Anwendungen sind auch technische Anwendungen im Bereich Schallschutz, Dämmung oder Isolierung vorgesehen. Besonders geeignet dafür sind Formkörper mit einem Anteil an Melamincyanurat oder Melaminharzpartikeln von 50 bis 95 Gew.-% und einem Celluloseanteil von 5 bis 50 Gew.-%.

Die folgenden Beispiele dienen zur Illustration der Erfindung. Prozente sind Gewichtsprozente, soweit nicht anders angegeben oder aus dem Zusammenhang ersichtlich.

Beispiel 1:

Es wurde durch Zusammenmischen und Rühren eine Suspension aus 6% Cellulose mit einem Cuoxam-DP von 615, 6% Melamincyanurat (Budit® 315 der Chemische Fabrik Budenheim KG), 52,5% NMMO und 35,5% Wasser hergestellt. Diese Suspension wurde durch Scherung und Wasserverdampfung unter den Bedingungen 95°C und Vakuum 70 mbar zu einer Lösung gebracht, welche anschließend durch eine Faserspinndüse gepresst, durch einen Luftspalt in ein Fällbad gebracht und abgezogen wurde. Anschließend erfolgte die Auswaschung des Lösungsmittels, Avivierung, Schneiden und Trocknung der Faser. Die so entstandene Faser hatte einen Gehalt von 50% ®Budit 315 und eine Feinheit von 3 dtex. Aus diesen Fasern wurden Vliese von 250 g/m$^2$ hergestellt. An diesen Vliesen wurden der LOI (nach ISO 4589) sowie ein Brandtest im Brandkasten (in Anlehnung an DIN 4102-1 Klasse B2, DIN 75 200, ISO 3795 DIN 75200) durchgeführt.

Weiterhin wurden durch Variation der Zusammensetzung weitere Fasern mit unterschiedlichen Gehalten an ®Budit hergestellt, aus denen ebenfalls Vliese hergestellt und getestet wurden. Eine Übersicht zur Zusammensetzung der Faser und den an Vliesen ermittelten LOI-Werten und Brandtests sind in folgender Tabelle gegeben:

| | Vergleichsfaser | Faser 1a | Faser 1b | Faser 1c | Faser 1d |
|---|---|---|---|---|---|
| Faserzusammensetzung Cellulose / Budit 315 | 100 / 0 | 83 / 17 | 75/25 | 67 / 33 | 50 / 50 |
| Faserfeinheit, dtex | 1,9 | 2,0 | 2,0 | 2,0 | 3,0 |
| Faserfestigkeit, cN/tex | 40,8 | 32,3 | 28,9 | 24,2 | 17,5 |
| Faserdehnung, % | | | | 15,3 | |
| 2 Vliesgrammatur, g/m$^2$ | 250 | 250 | 250 | 250 | 250 |
| Brandtest Brandkammer Brennweg, mm Einstufung | 180 B | 0 SE | 0 SE | 0 SE | 0 SE |
| LOI, % Sauerstoff | 19 | 23 | 25 | 26 | 31 |
| SE - selbstverlöschend (Probekörper entzündet sich, brennt aber nicht bis zur ersten Messmarke (38mm) B - Flamme legt den gesamten Brennweg bis. zum Probenende (180 mm) zurück | | | | | |

Beispiel 2:

Es wurde eine Spinnlösung der Zusammensetzung 13% Cellulose und 87% NMMO-Monohydrat sowie eine Suspension aus 30% Melamincyanurat (®Melapur MC 15) in wässriger Lösung mit 83% NMMO hergestellt. Anschließend wurden die Lösung und die Suspension mit einem dynamischen Mischer im Verhältnis 5,4 Teile Celluloselösung zu 1 Teil Melamincyanurat-Suspension intensiv gemischt. Weiterhin wurden aus der entstehenden Lösung Fasern ersponnen und Vliese hergestellt, wie es im Beispiel 1 dargestellt wurde. Das entstandene 250g/m$^2$ Vlies war selbstverlöschend, wobei die Flamme ohne Brennweg erlosch; der gemessene LOI betrug 27%. Die im Vlies verarbeitete Faser hatte einen Melamincyanurat-Anteil von 33% bei einer Feinheit von 1,9 dtex.

Beispiel 3:

Es wurde analog dem Beispiel 2 gearbeitet, jedoch setzte sich die zur Lösung zugemischte Suspension aus 25% Melamincyanurat (®Budit 315), 5% Aluminiumhydroxid (®Apyral 40CD) in wässriger Lösung mit 83% NMMO zusammen. Die ersponnene Faser hatte einen Gehalt von 27% Melamincyanurat und 5,5% Aluminiumhydroxid. Das aus diesen Fasern entstandene 250 g/m$^2$ Vlies war selbstverlöschend, wobei die Flamme ohne Brennweg erlosch; der gemessene LOI betrug 26%.

Beispiel 4:

Es wurde analog Beispiel 1 gearbeitet, jedoch wurde neben Cellulose, Melamincyanurat und wässrigem NMMO noch eine separat hergestellte Dispersion von in Wasser dispergiertem und mit einem Dispersionshilfsmittel stabilisiertem Schichtsilikat (®Nanofil 116) zugegeben. Weiterhin wurden die Lösung und die Fasern analog Beispiel 1 hergestellt. Die entstandenen Fasern der Feinheit 2 dtex hatten die Zusammensetzung 75% Cellulose, 20% Melamincyanurat und 5 % Schichtsilikat. Brandtests ergaben an einem Gestrick von 300 g/m$^2$, hergestellt aus 100% Fasergarnen dieser Faser der Schnittlänge 38 mm, folgende Beurteilung: LOI: 29%

Brenntest im Brandkasten: selbstverlöschend ohne Brennweg einer Flamme. Nach 50 Industriewäschen wurden die Tests mit fast identischen Ergebnissen (LOI: 28, Brenntest selbstverlöschend) abgeschlossen.

Beispiel 5:

Es wurde durch Zusammenmischen und Rühren eine Suspension aus Cellulose mit einem DP von 615, Melamincyanurat (®Budit 315) und 60 %igem wässrigem NMMO hergestellt. Diese Suspension wurde durch Scherung und Wasserverdampfung bei einer Temperatur von 95°C und einem Druck von 70 mbar in eine Lösung folgender Zusammensetzung umgewandelt:

2,9% Cellulose, 26,5% Melamincyanurat, 70,6% NMMO-Monohydrat.

Aus der entstandenen Lösung mit einer Nullscherviskosität von 620 Pa s (85°C) wurde durch ein modifiziertes Blasspinnverfahren ein Spinnvlies erhalten, welches nach Auswaschen des NMMO und Trocknung aus 91% Melamincyanurat und 9% Cellulose bestand. Je nach Einstellung der Bedingungen der Spinnpumpe, der Blasluftmenge und -temperatur, der Bandgeschwindigkeit des Vliestransportes wurden Spinnvliese mit 15 bis 400 g/m$^2$ und Faserfeinheiten von 1 bis 10 $\mu$m erhalten.

Beispiel 6:

Durch gemeinsames Vermischen von 64 g lufttrockener Cellulose mit einem DP von 620, 775 g wässrigen NMMO (60%) und 21g feinvermahlenen veretherten Melaminharzes (D$_{98}$ 5 $\mu$m) und Abdampfen von 238 g Wasser durch Anlegen eines Vakuum von 60 mbar bei 95°C wurde eine homogene Suspension von Melaminharz in einer Celluloselösung erhalten. Diese wurde nach einem Luftspaltspinnverfahren mit anschließender Wäsche und Trocknung zu Fasern der Feinheit 2,3 dtex versponnen. Aus diesen Fasern hergestellte Vliese waren beim Brenntest in einer Brennkammer selbstverlöschend und durch einen LOI von 25 gekennzeichnet.

**Patentansprüche**

1. Lyocell-Formkörper mit einer Cellulosematrix, der durch einen Gehalt an Melamincyanurat oder vernetztem oder teilvernetztem Melaminharz schwer entflammbar ist, **dadurch gekennzeichnet, dass** das Melamincyanurat oder das Melaminharz in Form von Partikeln über den Querschnitt der Cellulosematrix homogen verteilt ist, wobei der Formkörper einen Anteil an Melamincyanurat oder Melaminharzpartikeln von 10 bis 50 Gew.-% für textile Anwendungen mit Flammschutzeigenschaften aufweist oder einen Anteil von 50 bis 95 Gew.-% für technische Anwendungen.

2. Formkörper gemäß Anspruch 1, **dadurch gekennzeichnet, dass** er die Form von Fasern, Filamenten, Direktspinnvliesen, Folien oder Schaumstoffen hat.

3. Formkörper gemäß Anspruch 1 oder 2, **dadurch gekennzeichnet, dass** er für textile Anwendungen mit Flammschutzeigenschaften, insbesondere im Bekleidungsbereich, geeignet ist und einen Anteil an Melamincyanurat oder Melaminharzpartikeln von 10 bis 35 Gew.-% aufweist.

4. Formkörper gemäß Anspruch 1 oder 2, **dadurch gekennzeichnet, dass** er für technische Anwendungen, bevorzugt im Bereich Schallschutz, Dämmung, Isolierung, geeignet ist und einen Anteil an Melamincyanurat oder Melaminharzpartikeln von 70 bis 95 Gew.-% aufweist.

5. Formkörper gemäß Ansprüchen 1 bis 3, **dadurch gekennzeichnet, dass** die eingesetzten Melaminharzpartikel einen Vernetzungsgrad von 75 bis 100% besitzen und dass die Beziehung zwischen der mittleren Korngröße der Melaminharzpartikel von 98% (D$_{98}$) und des Durchmessers der erhaltenen Fasern oder Folien (D$_F$) folgende Gleichung erfüllt:

$$\frac{(D_{98})^2}{(D_F)^2} \leq 0,25$$

6. Formkörper gemäß einem oder mehreren der Ansprüche 1 bis 5, **dadurch gekennzeichnet, dass** er mindestens ein weiteres, vorzugsweise synergistisch wirkendes Flammschutzmittel enthält, bevorzugt Aluminiumhydroxid, roten Phosphor, eine phosphororganische Verbindung, silikatische Nanopartikel oder eine Bor enthaltende Verbindung, wobei die Löslichkeit des weiteren Flammschutzmittels in Wasser von 25 °C weniger als 10 mg/l beträgt und das weitere Flammschutzmittel partikulär vorliegt, wobei die Partikel kleiner als 50 $\mu$m, bevorzugt kleiner als 10 $\mu$m sind.

7. Formkörper gemäß Anspruch 1, **dadurch gekennzeichnet, dass** er zusätzlich zu Melamincyanurat Melamin oder andere Melaminsalze enthält, bevorzugt Melaminoxalat, - phosphat oder -borat.

8. Verfahren zur Herstellung eines schwer entflammbaren Lyocell-Formkörpers gemäß Anspruch 1 mit den Schritten:

   a) Herstellen einer Suspension von Cellulose in einem wasserhaltigen oder wasserfreien organischen Lösungsmittel, das ein Direktlösungsmittel für Cellulose ist,
   b) Überführen der Suspension in eine Celluloselösung durch Scherung, gegebenenfalls verbunden mit einem Abdampfen von Wasser,
   c) Verformen der Lösung durch Extrusion oder Blasformen mit Hilfe eines Formwerkzeugs,
   d) Einleiten des Formkörpers in ein Fällbad,
   e) Auswaschen und gegebenenfalls Nachbehandeln sowie
   f) Trocknen des Formkörpers;
   **dadurch gekennzeichnet, dass** im Schritt a) oder in oder am Ende von Schritt b) Melamincyanurat- oder vernetzte oder teilvernetzte Melaminharz-Partikel in einer Menge zugemischt werden, die ausreicht um dem Formkörper schwer entflammbar zu machen.

9. Verfahren gemäß Anspruch 8, **dadurch gekennzeichnet, dass** das organische Lösungsmittel N-Methylmorpholin-N-oxid Monohydrat oder eine ionische Flüssigkeit, bevorzugt Butyl-methyl-imidazoliumchlorid (BMIMCI), Ethyl-methyl-imidazoliumacetat (EMIMAc) oder Ethyl-methyl-imidazoliumdiethylphosphat (EMIM DEP), ist.


## Claims

1. Shaped lyocell article having a cellulose matrix and being of low flammability by virtue of the presence therein of melamine cyanurate or of partly or wholly crosslinked melamine resin, **characterized in that** the melamine cyanurate or the melamine resin is distributed homogeneously in the form of particles over the cross section of the cellulose matrix, the shaped article having a fraction of melamine cyanurate or melamine resin particles of 10 to 50 wt% for textile applications with flame retardancy properties, or a fraction of 50 to 95 wt% for industrial applications.

2. Shaped article according to Claim 1, **characterized in that** it has the form of fibers, filaments, direct spunbondeds, films or foams.

3. Shaped article according to Claim 1 or 2, **characterized in that** it is suitable for textile applications with flame retardancy properties, especially in the apparel segment, and has a fraction of melamine cyanurate or melamine resin particles of 10 to 35 wt%.

4. Shaped article according to Claim 1 or 2, **characterized in that** it is suitable for industrial applications, preferably in the sound protection, insulating, and isolating segment, and has a fraction of melamine cyanurate or melamine resin particles of 70 to 95 wt%.

5. Shaped article according to Claims 1 to 3, **characterized in that** the melamine resin particles used possess a degree of crosslinking of 75 to 100 % and **in that** the relation between the average size of 98 % of the melamine resin particles ($D_{98}$) and the diameter of the resulting fibers or films (Df) satisfies the following equation:

$$\frac{(D_{98})^2}{(D_f)^2} \leq 0.25$$

6. Shaped article according to one or more of Claims 1 to 5, **characterized in that** it comprises at least one further, preferably synergistic, flame retardant, more preferably aluminum hydroxide, red phosphorus, an organophosphorus compound, silicatic nanoparticles or a compound comprising boron, the solubility of the further flame retardant in water of 25 °C being less than 10 mg/l and the further flame retardant being in particulate form, the particles being

smaller than 50 $\mu$m, preferably smaller than 10 $\mu$m.

7. Shaped article according to Claim 1, **characterized in that** further to melamine cyanurate it comprises melamine or other melamine salts, preferably melamine oxalate, melamine phosphate or melamine borate.

8. Method for producing a shaped, low-flammability lyocell article according to Claim 1, with the following steps:

 a) production of a suspension of cellulose in a hydrous or anhydrous organic solvent which is a direct solvent for cellulose,
 b) conversion of the suspension into a cellulose solution by shearing, optionally in conjunction with evaporative removal of water,
 c) forming of the solution by extrusion or blow molding by means of a shaping tool,
 d) introduction of the shaped article into a precipitation bath,
 e) washing and optionally aftertreating, and
 f) drying of the shaped article;
 **characterized in that** in step a) or in or at the end of step b), particles of melamine cyanurate or of wholly or partly crosslinked melamine resin are admixed in an amount sufficient to render the shaped article of low flammability.

9. Method according to Claim 8, **characterized in that** the organic solvent is N-methylmorpholine N-oxide monohydrate or an ionic liquid, preferably butylmethylimidazolium chloride (BMIMCl), ethylmethylimidazolium acetate (EMIMAc) or ethylmethylimidazolium diethylphosphate (EMIM DEP).

## Revendications

1. Corps moulé en lyocell avec une matrice de cellulose, qui est difficilement inflammable de par une teneur en cyanurate de mélamine ou résine de mélamine réticulée ou partiellement réticulée, **caractérisé en ce que** le cyanurate de mélamine ou la résine de mélamine est répartie de manière homogène sous la forme de particules sur la section transversale de la matrice de cellulose, dans lequel le corps moulé présente une part de cyanurate de mélamine ou des particules de résine de mélamine de 10 à 50 % en poids pour des applications textiles avec des propriétés ignifuges ou une part de 50 à 95 % en poids pour des applications techniques.

2. Corps moulé selon la revendication 1, **caractérisé en ce qu'**il présente la forme de fibres, filaments, non tissés directs, films ou mousses.

3. Corps moulé selon la revendication 1 ou 2, **caractérisé en ce qu'**il est approprié pour des applications textiles avec des propriétés ignifuges, en particulier dans le domaine de l'habillement et présente une part de cyanurate de mélamine ou particules de résine de mélamine de 10 à 35 % en poids.

4. Corps moulé selon la revendication 1 ou 2, **caractérisé en ce qu'**il est approprié pour des applications techniques, de préférence dans le domaine de l'insonorisation, isolation, isolement, et présente une part de cyanurate de mélamine ou particules de résine de mélamine de 70 à 95 % en poids.

5. Corps moulé selon les revendications 1 à 3, **caractérisé en ce que** les particules de résine de mélamine utilisées possèdent un degré de réticulation de 75 à 100 % et que le rapport entre la granulométrie médiane des particules de résine de mélamine de 98 % ($D_{98}$) et le diamètre des fibres ou films ($D_F$) obtenus satisfait à l'équation suivante :

$$\frac{(D_{98})^2}{(D_F)^2} \leq 0,25$$

6. Corps moulé selon une ou plusieurs des revendications 1 à 5, **caractérisé en ce qu'**il contient au moins un autre moyen ignifuge agissant de préférence de manière synergique, de préférence de l'hydroxyde d'aluminium, du phosphore rouge, un composé organophosphorique, des nanoparticules siliceuses ou un composé contenant du bore, dans lequel la solubilité de l'autre moyen ignifuge dans de l'eau de 25 °C s'élève à moins de 10 mg/l et l'autre moyen ignifuge se présente sous la forme particulaire, dans lequel les particules sont inférieures à 50 $\mu$m, de

préférence inférieures à 10 $\mu$m.

**7.** Corps moulé selon la revendication 1, **caractérisé en ce qu'**il contient outre du cyanurate de mélamine, de la mélamine ou d'autres sels de mélamine, de préférence de l'oxalate, du phosphate ou du borate de mélamine.

**8.** Procédé de fabrication d'un corps moulé en lyocell difficilement inflammable selon la revendication 1 comportant les étapes suivantes :

a) la fabrication d'une suspension de cellulose dans un solvant organique contenant de l'eau ou exempt d'eau qui est un solvant direct pour de la cellulose,
b) le transfert de la suspension dans une solution de cellulose par cisaillement, éventuellement en liaison avec une évaporation d'eau,
c) la déformation de la solution par extrusion ou moulage par soufflage à l'aide d'un outil de moulage,
d) l'introduction du corps moulé dans un bain de précipitation,
e) le lavage et éventuellement le post-traitement ainsi que
f) le séchage du corps moulé ;
**caractérisé en ce qu'**à l'étape a) ou à ou à la fin de l'étape b), des particules de cyanurate de mélamine ou résine de mélamine réticulées ou partiellement réticulées sont ajoutées dans une quantité qui suffit afin de rendre le corps moulé difficilement inflammable.

**9.** Procédé selon la revendication 8, **caractérisé en ce que** le solvant organique est un monohydrate de N-oxyde de N-méthylmorpholine ou un liquide ionique, de préférence du chlorure de butyle-méthyle-imidazolium (BMIMCl), de l'acétate d'éthyle-méthyle-imidazolium (EMIMAc) ou du phosphate de diéthyle d'éthyle-méthyle-imidazolium (EMIM DEP).

**EP 3 117 032 B1**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 4220472 A
- WO 2003040460 A
- DE 10038100
- DE 4306808
- WO 1994026962 A
- WO 2011045673 A
- WO 2011026159 A

**In der Beschreibung aufgeführte Nicht-Patentliteratur**

- *CHEMICAL ABSTRACTS,* 37640-57-6